# EUROPEAN PATENT APPLICATION

(11) **EP 1 147 797 A2**
(43) Date of publication of application: **24.10.2001**
(21) Application number: 01301467.5
(22) Date of filing: 19.02.2001
(51) Int. Cl.: A63F 13/10, A63F 13/12

(54) **Entertainment system, entertainment apparatus, recording medium, and program**

(30) Priority: 18.02.2000 JP 2000042063
(71) Applicant: Sony Computer Entertainment Inc., Tokyo 107-0052 (JP)
(72) Inventor: Takatsuka, Susumu, c/o Sony Computer, Minato-ku, Tokyo 107-0052 (JP); Miyaki, Satoru, c/o Sony Computer, Minato-ku, Tokyo 107-0052 (JP); Matsumoto, Shingo, c/o Sony Computer, Minato-ku, Tokyo 107-0052 (JP)
(74) Representative: Turner, James Arthur

(57) **Abstract**

An entertainment system has an item acquiring unit (302) for displaying a scene in which a character (202) displayed on a display monitor (24) is delivered and dropped according to a control input from the user, and when the character (202) reaches a position where an item (204) is placed, controlling the character (202) to make an action to acquire the item (204), an item transferring unit (304) for transferring the acquired item (204) as a present (214) to an entertainment apparatus (16) of another user, and an item displaying unit (306) for displaying the item (204) presented from another user.

## Description

The present invention relates to an entertainment system for example one having at least an entertainment apparatus for executing various programs, a manual controller, and a display unit, an entertainment apparatus for executing various programs, a recording medium storing a program and data that are used by the entertainment apparatus, and a program for realizing the entertainment system.

Some entertainment systems including entertainment apparatus such as video game machines display video game images based on video game data stored in a recording medium such as a CD-ROM or the like on the display screen of a television receiver while allowing the user or game player to play the video game with commands entered via a manual controller.

In those entertainment systems, the entertainment apparatus and the manual controller are usually connected to each other by a serial interface. When a clock signal is supplied from the entertainment apparatus to the manual controller, the manual controller sends key switch information based on the user's control entries in synchronism with the clock signal.

Recently developed manual controllers incorporate a vibration generating means for applying vibrations to the user based on a request from an external apparatus such as an entertainment apparatus, for example. While a video game is in progress, the vibration generating means applies various different kinds of vibrations to the user in response to user's different control entries.

Some video games such as role-playing games are designed to handle items in such an interesting way that when a character acquires an item, the character's HP (hit point) is recovered or the character can use the acquired item as a weapon.

In almost all video games, the user uses the manual controller to move a character being displayed and position the character at a location where an item is placed, and then presses a decision button to enable the character to acquire the item.

While the game player is playing the video game, the user is empathizing with the character and attempts to acquire an item for the character itself, rather than acting like a third party to move the character and try to acquire an item for the user.

Heretofore, the video games have not incorporated a concept for the user to acquire an item while playing with the character and present the acquired item to another user or the character.

Various respective aspects and features of the invention are defined in the appended claims.

Embodiments of the present invention can provide an entertainment system, an entertainment apparatus, a recording medium, and a program which incorporate a new process of handling items to allow the user to acquire an item while playing with a character and present the acquired item to another user or the character, and to exchange an acquired item for money to buy a character or an item in a video game.

According to an aspect of the present invention, there is provided an entertainment system comprising an entertainment apparatus for executing various programs, at least one manual controller for entering control requests from the user into the entertainment apparatus, a display unit for displaying images outputted from the entertainment apparatus, item processing mean for processing an item handled by a character displayed on the display unit, the item processing mean comprising item acquiring means for displaying a scene in which the character displayed on the display unit is carried according to a control input from the user, and when the character reaches a position where an item is placed, controlling the character to make an action to acquire the item.

According to another aspect of the present invention, there is provided an entertainment apparatus for connection to a manual controller for outputting a control request from the user, and a display unit for displaying images, comprising item processing mean for processing an item handled by a character displayed on the display unit, the item processing mean comprising item acquiring means for displaying a scene in which the character displayed on the display unit is carried according to a control input from the user, and when the character reaches a position where an item is placed, controlling the character to make an action to acquire the item.

According to still another aspect of the present invention, there is provided a recording medium storing a program and data for use in an entertainment apparatus for connection to a manual controller for outputting a control request from the user, and a display unit for displaying images, the program comprising the steps of processing an item handled by a character displayed on the display unit, the step of processing an item comprising the steps of displaying a scene in which the character displayed on the display unit is carried according to a control input from the user, and when the character reaches a position where an item is placed, controlling the character to make an action to acquire the item .

According to yet another aspect of the present invention, there is provided a program readable and executable by a computer, for use in an entertainment apparatus for connection to a manual controller for outputting a control request from the user, and a display unit for displaying images, the program comprising the steps of processing an item handled by a character displayed on the display unit, the step of processing an item comprising the steps of displaying a scene in which the character displayed on the display unit is carried according to a control input from the user, and when the character reaches a position where an item is placed, controlling the character to make an action to acquire the item.

In a video game, the displayed character is delivered and dropped at a suitable spot according to a control input from the user. At the spot where the character is dropped, the character searches for an item, for example, and when the character finds the item, the character makes an action to take the item and shows the item to the user.

Therefore, the character, with which the user would be empathizing, does not find an item for the character itself, but the character searches for and acquires an item for the user.

As the video game progresses, the user can enjoy various different modes of handling items, e.g., the user may play with a displayed character and acquire an item, and present the acquired item to another user or character, or the user may exchange the acquired item for money, and purchase a character or an item with the money.

The item processing means or step may comprise item storing means for or the step of, when the character reaches a spot where the item is to be stored according to a control input from the user, controlling the character to make an action to store the acquired item in the spot.

It is thus possible to display a scene in which the acquired item is stored into a cabinet in a house of the character, for example. Therefore, the user can have not only the fun of acquiring the item, but also the fun of storing the acquired item.

The item processing means or step may comprise item transferring means for or the step of transferring the acquired item to an entertainment apparatus of another user connected via a network.

The item transferring means or step allows the acquired item to be presented to another user via the network. Consequently, the user can communicate with another user with not only a message or a video image such as a video image captured by a digital camera or the like, but also an item handled by the character.

Sending a message or a video image to another user requires a cumbersome process to be performed in advance, such as a preparatory action or message correction prior to the transmission. However, sending an item handled by the character to another user is simpler than sending a message or a video image, and hence is more effective in communicating with another user. If a scene in which the character sends the present to another user is displayed, then the displayed scene is effective to give the other user the impression that the character has taken the trouble of bringing the present to the other user. The communication between the users, which would otherwise tend to be business-like, is thus made personal and intimate by such a displayed scene.

The item transferring means or step may comprise means for or the step of transferring at least a code indicative of a type of the item when the item is transferred to the entertainment apparatus of the other user, and the item processing means or step may comprise item displaying means for or the step of displaying the item based on the transferred code. Inasmuch as it is not necessary to transfer image data of the item itself, the transferring process can be carried out at a high speed.

The item processing means or step may comprise scene executing means for or the step of, when the acquired item is given to the character, selecting and executing one of a plurality of scenes including a scene in which at least the character uses the item and a scene in which the character exchanges the item for hypothetical money, according to a selecting action of the user.

With this arrangement, after the character has acquired an item, there is displayed a scene in which the character uses the item, e.g., a scene in which the character eats the item, or a scene in which the character exchanges the item for money, e.g., a scene in which the character goes to an item shop and sells the item and exchanges the item for money.

The item processing means or step may comprise second scene executing means for or the step of, when the hypothetical money is given to the character, selecting and executing one of a plurality of scenes including a scene in which at least the character purchases the item with the hypothetical money and a scene in which the character purchases another character, according to a selecting action of the user.

With this arrangement, after the character has exchanged an item for money, there is displayed a scene in which the character goes to an item shop and purchases an item indicated by the user with the money that the character has, or a scene in which the character purchases another character, e.g., a scene in which the character goes to a place for selling characters or goes to a character and purchases another character indicated by the user with the money that the character has.

The invention will now be described by way of example with reference to the accompanying drawings, throughout which like parts are referred to by like references, and in which:
FIG. 1 is a block diagram of an entertainment system according to the present invention;
FIG. 2 is a perspective view of an entertainment apparatus and peripheral devices connected thereto;
FIG. 3 is a block diagram of a circuit arrangement of the entertainment apparatus;
FIG. 4 is a block diagram of a circuit arrangement of a manual controller connected to the entertainment apparatus;
FIG. 5 is a diagram showing how an item can be used;
FIGS. 6A through 6E are diagrams showing scenes in which a character is moved to a spot where an item is likely to be present and takes out the item;
FIG. 7 is a view showing the interior of a house where a character lives;
FIG. 8 is a view showing an item selection view;
FIG. 9 is a view showing a scene for selecting a character with a cursor;
FIG. 10 is a view showing a scene in which a character travels to another user while carrying a present;
FIG. 11 is a view showing a scene in which a character travels to another user who lives in a distant place;
FIG. 12 is a view showing a scene in which a character opens the box of a present and is delighted;
FIG. 13 is a view showing a scene in which a label is applied to a present;
FIG. 14 is a view showing a file for keeping labels;
FIG. 15 is a view showing a scene in which a character goes to an item shop to exchange an item for money or buy an item;
FIG. 16 is a view showing a savings box;
FIG. 17 is a view showing a scene in which a character goes to a special character for selling characters, and buys another character;
FIG. 18 is a view showing characters representing carpenters that appear when a house-remodeling coupon is used and also showing the manner in which the characters appear;
FIG. 19 is a view showing the manner in which the house of a character is remodeled;
FIG. 20 is a view showing the instant the house is remodeled into a gorgeous house;
FIG. 21 is a functional block diagram of an item processing means according to the present invention;
FIG. 22 is a flowchart of a processing sequence of an item acquiring means;
FIG. 23 is a flowchart of a processing sequence of an item transferring means;
FIG. 24 is a flowchart of a processing sequence of a server;
FIG. 25 is a flowchart of a processing sequence of an item displaying means;
FIG. 26 is a flowchart of a processing sequence of a first scene executing means; and
FIG. 27 is a flowchart of a processing sequence of a second scene executing means.

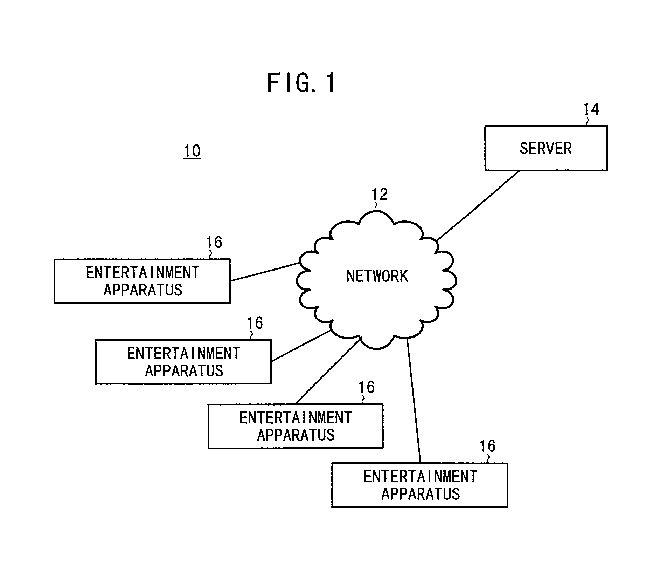

An entertainment system, an entertainment apparatus, a recording medium, and a program according to an embodiment of the present invention will be described below with reference to FIGS. 1 through 27.

As shown in FIG. 1, an entertainment system 10 according to the present invention comprises a server 14 connected to a network 12 and a plurality of entertainment apparatus 16 accessible via the server 14 and the network 12.

In the illustrated embodiment, the network 12 comprises the Internet, and the server 14 comprises a certain Web site, i.e., a Web server having a home page. A user connected to the Internet 12 can browse information in a hyper-text format of the Internet via the WWW (World Wide Web).

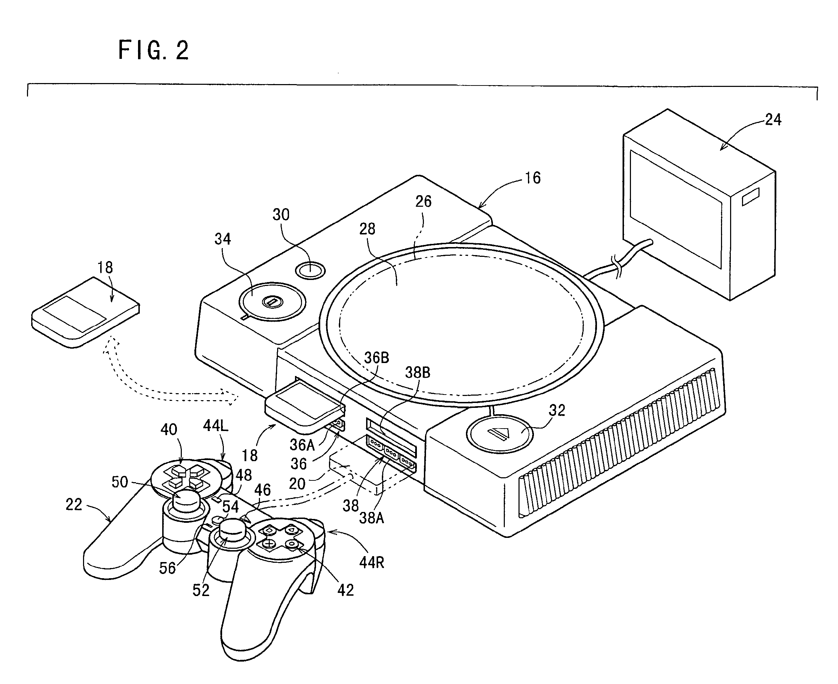

As shown in FIG. 2, the entertainment system 10 has a memory card 18 detachably connected to the entertainment apparatus 16, a manual controller 22 detachably connected to the entertainment apparatus 16 by a connector 20, and a display monitor 24 such as a television receiver which is supplied with video and audio output signals from the entertainment apparatus 16.

The entertainment apparatus 16 reads a program recorded in a mass storage medium such as an optical disk 26 such as a CD-ROM or the like, and executes a game, for example, based on the program depending on commands supplied from the user, e.g., the game player, via the manual controller 22. The execution of the game mainly represents controlling the progress of the game by controlling the display of images and the generation of sounds on the display monitor 24 based on manual input actions entered from the manual controller 22 via the connector 20.

The entertainment apparatus 16 has a substantially flat casing in the shape of a rectangular parallelepiped which houses a disk loading unit 28 disposed centrally for loading an optical disk 26 which stores an application program and data for a video game or the like. The casing supports a reset switch 30 for resetting a program which is being presently executed, a disk control switch 32 for controlling the loading of the optical disk 26, a power supply switch 34, and two slots 36, 38.

The entertainment apparatus 16 may be supplied with the application program via a communication link, rather than being supplied from the optical disk 26 as the recording medium.

The slots 36, 38 have respective upper slot units 36B, 38B and respective lower slot units 36A, 38A. Two manual controllers 22 may be connected respectively to the lower slot units 36A, 38A, and memory cards 18 for storing flags indicative of interim game data may be connected respectively to the upper slot units 36B, 38B. The slots 36, 38 (the upper slot units 36B, 38B and the lower slot units 36A, 38A) are asymmetrically shaped to prevent the connectors 20 and the memory cards 18 from being inserted in the wrong direction.

The manual controller 22 has first and second control pads 40, 42, an L (Left) button 44L, an R (Right) button 44R, a start button 46, and a selection button 48. The manual controller 22 also has first and second swivel control knobs or joysticks 50, 52 for inputting analog control actions, a mode selection switch 54 for selecting control modes of the joysticks 50, 52, and a mode indicator 56 for indicating a selected control mode.

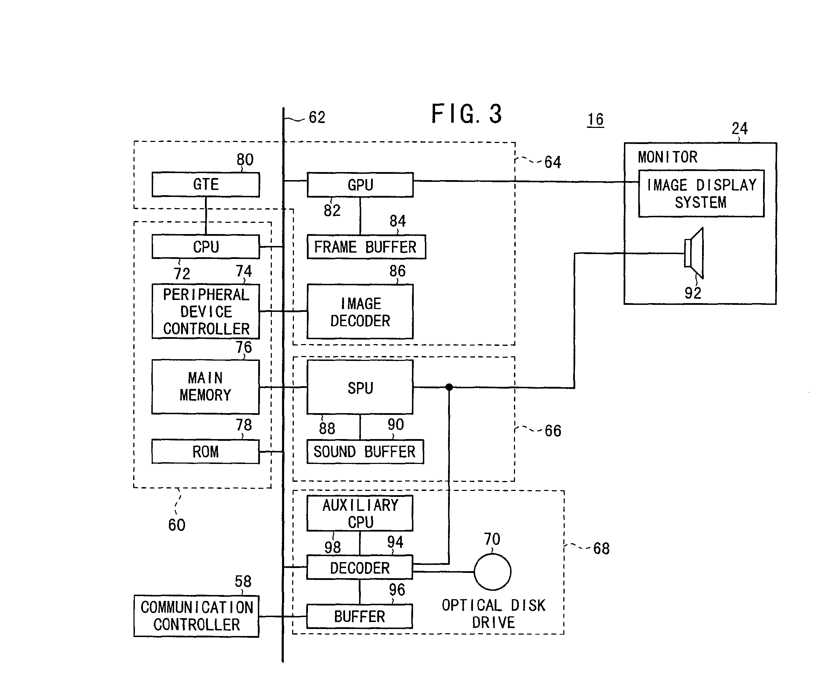

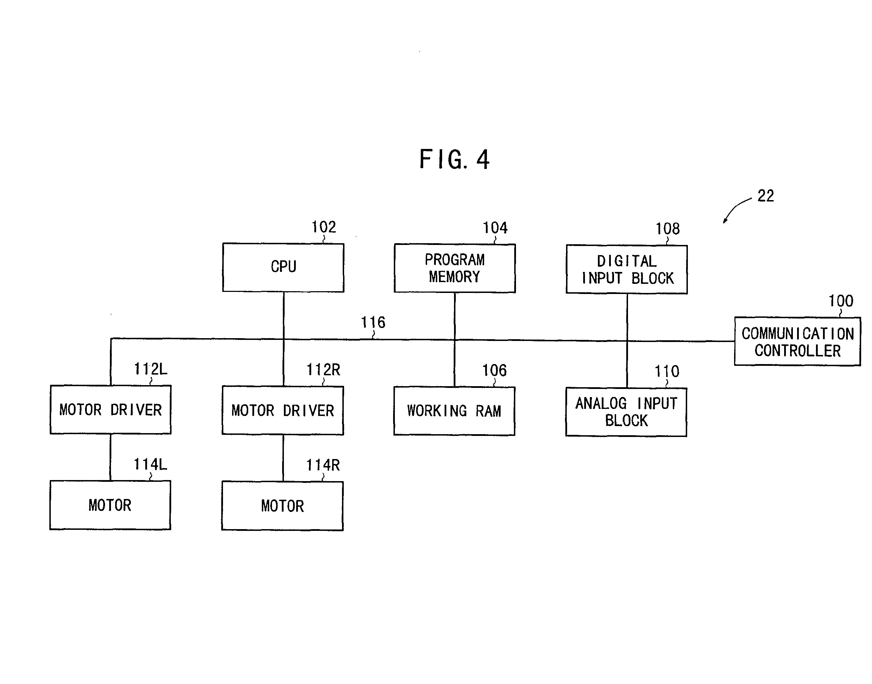

Circuit arrangements of the entertainment apparatus 16 and the manual controller 22 will be described below with reference to FIGS. 3 and 4.

As shown in FIG. 3, the entertainment apparatus 16 generally comprises a control system 60, a graphic generating system 64 connected to the control system 60 via a system bus 62, a sound generating system 66 connected to the control system 60 via the system bus 62, and an optical disk control system 68 connected to the control system 60 via the system bus 62. A communication controller 58 for controlling data to be inputted to and outputted from the manual controller 22 and the memory card 18 is also connected to the control system 60 via the system bus 62.

The manual controller 22 supplies commands (including control data) from the user via a communication controller 100 (see FIG. 4) of the manual controller 22 and the communication controller 58 to the entertainment apparatus 16. The optical disk control system 68 includes an optical disk drive 70 in which the optical disk 26, which may comprise a CD-ROM or the like as a specific example of a recording medium according to the present invention, is loaded.

The control system 60 controls motions of characters displayed on the display monitor 24 based on a program and data read from the optical disk 26 and commands supplied from the manual controller 22.

The control system 60 includes a central processing unit (CPU) 72, a peripheral device controller 74 for controlling interrupts and direct memory access (DMA) data transfer, a main memory 76, and a read-only memory (ROM) 78 which stores various programs such as an operating system for managing the graphic generating system 64, the sound generating system 66, etc. The main memory 76 can store at least a game program that is supplied from the optical disk 26 and executed by the CPU 72.

The CPU 72 controls the entertainment apparatus 16 in its entirety by executing the operating system stored in the ROM 78. The CPU 72 comprises a 32-bit RISC-CPU, for example.

When the entertainment apparatus 16 is turned on, the CPU 72 executes the operating system stored in the ROM 78 to start controlling the graphic generating system 64, the sound generating system 66, etc.

When the operating system is executed, the CPU 72 initializes the entertainment apparatus 16 in its entirety for confirming its operation, and thereafter controls the optical disc control system 68 to execute an application program such as a game program recorded in the optical disk 26.

As the application program such as a game program is executed, the CPU 72 controls the graphic generating system 64, the sound generating system 66, etc. depending on commands entered by the user for thereby controlling the display of images and the generation of music sounds and sound effects.

The graphic generating system 64 comprises a geometry transfer engine (GTE) 80 for performing coordinate transformations and other processing, a graphic processing unit (GPU) 82 for rendering image data according to instructions from the CPU 72, a frame buffer 84 for storing image data rendered by the GPU 82, and an image decoder 86 for decoding image data compressed and encoded by an orthogonal transform such as a discrete cosine transform.

The GTE 80 has a parallel arithmetic mechanism for performing a plurality of arithmetic operations parallel to each other, and can perform coordinate transformations and light source calculations, and calculate matrixes or vectors at a high speed in response to a request from the CPU 72.

Specifically, the GTE 80 can calculate the coordinates of a maximum of 1.5 million polygons per second for a flat shading process to plot one triangular polygon with one color, for example. With the GTE 80, the entertainment apparatus 16 is able to reduce the burden on the CPU 72 and perform high-speed coordinate calculations.

According to an image generating instruction from the CPU 72, the GPU 82 generates and stores the data of a polygon or the like in the frame buffer 84. The GPU 82 is capable of generating and storing a maximum of 360 thousand polygons per second.

The frame buffer 84 comprises a dual-port RAM, and is capable of simultaneously storing image data generated by the GPU 82 or image data transferred from the main memory 76, and reading image data for display. The frame buffer 84 has a storage capacity of 1 Mbytes, for example, and is handled as a matrix made up of a horizontal row of 1024 pixels and a vertical column of 512 pixels, each pixel comprising 16-bit data.

The frame buffer 84 has a display area for storing image data to be outputted as video output data, a CLUT (color look-up table) area for storing a color look-up table which will be referred to by the GPU 82 when it renders a polygon or the like, and a texture area for storing texture data to be subjected to coordinate transformations when a polygon is generated and mapped onto a polygon generated by the GPU 82. The CLUT area and the texture area are dynamically varied as the display area is varied.

The GPU 82 can perform, in addition to the flat shading process, a Gouraud shading process for determining colors in polygons by interpolating intensities from the vertices of the polygons, and a texture mapping process for mapping textures stored in the texture area onto polygons. For performing the Gouraud shading process or texture mapping process, the GTE 80 can perform coordinate calculations for a maximum of about 500,000 polygons per second.

The image decoder 86 is controlled by the CPU 72 to decode image data of a still or moving image stored in the main memory 76, and store the decoded image into the main memory 76.

Image data reproduced by the image decoder 86 is transferred to the frame buffer 84 by the GPU 82, and can be used as a background for an image plotted by the GPU 82.

The sound generating system 66 comprises a sound processing unit (SPU) 88 for generating music sounds, sound effects, etc. based on instructions from the CPU 72, and a sound buffer 90 for storing music sounds, sound effects, etc. generated by the SPU 88. Audio signals representing music sounds, sound effects, etc. generated by the SPU 88 are supplied to audio terminals of the monitor 24. The monitor 24 has a speaker 92 which radiates music sounds, sound effects, etc. generated by the SPU 88 based on the supplied audio signals.

The SPU 88 has an ADPCM (adaptive differential PCM) function for reproducing 16-bit audio data which has been encoded as 4-bit differential audio data by ADPCM, a reproducing function for reproducing waveform data stored in the sound buffer 90 to generate sound effects, etc., and a modulating function for modulating and reproducing the waveform data stored in the sound buffer 90.

The sound system 66 with these functions can be used as a sampling sound source which generates music sounds, sound effects, etc. based on the waveform data stored in the sound buffer 90 according to instructions from the CPU 72.

The optical disk control system 68 comprises an optical disk drive 70 for reproducing application programs and data recorded on the optical disk 26, a decoder 94 for decoding programs and data that are recorded with an error correcting code added thereto, and a buffer 96 for temporarily storing data read from the optical disk drive 70 so as to allow the data from the optical disk 26 to be read at a high speed. An auxiliary CPU 98 is connected to the decoder 94.

Audio data recorded on the optical disk 26 which is read by the optical disk drive 70 includes PCM data converted from analog sound signals, in addition to the ADPCM data.

The ADPCM data, which is recorded as 4-bit differential data of 16-bit digital data, is decoded by the decoder 94, supplied to the SPU 88, converted thereby into analog data, and applied to drive the speaker 92.

The PCM data, which is recorded as 16-bit digital data, is decoded by the decoder 94 and then applied to drive the speaker 92.

As shown in FIG. 4, the manual controller 22 comprises a communication controller 100, a CPU 102, a program memory 104, a working RAM 106, a digital input block 108, an analog input block 110, a left motor driver 112L, a left motor 114L, a right motor driver 112R, and a right motor 114R. These components of the manual controller 22 are connected to a bus 116.

The digital input block 108 functions as a manual input controller for the pressable control members of the first control pad 40 and the second control pad 42. The analog input block 110 functions as a manual input controller for the first and second joysticks 50, 52. The digital input block 108 and the analog input block 110 allow the user to enter various items of information into the manual controller 22.

The communication controller 100 has a function to effect serial communications with an external device. The communication controller 100 is electrically connectable to the communication controller 58 (see FIG. 3) of the entertainment apparatus 16, for example, for data communications with the entertainment apparatus 16.

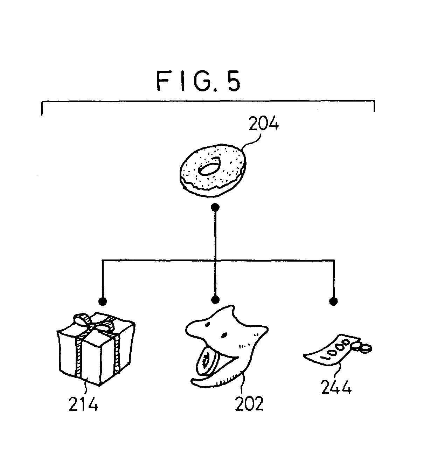

Two characteristic functions of the entertainment system 10 according to the present embodiment will be described below with reference to FIGS. 5 through 27.

The first function is to display a scene in which a character displayed on the display monitor 24 is carried (delivered or dropped) according to a control input from the user, and when the character reaches a position where an item is located, the character makes an action to acquire the item.

The second function is related to modes to use the acquired item. For example, as shown in FIG. 5, an acquired item 204 is transferred as a present 214 to the entertainment apparatus 16 of another user connected via the network 12, or the acquired item 204 is given to a character 202 to have the character 202 make a desired action, e.g., eat the acquired item 204 or exchange the acquired item 204 for money 244, or the money 244 gained by selling the acquired item 204 is given to the character 202 to have the character 202 make a desired action.

The first and second functions will specifically be described in detail below. Specific examples described below are given for illustrative purposes only, and the first and second functions may be performed in various other examples.

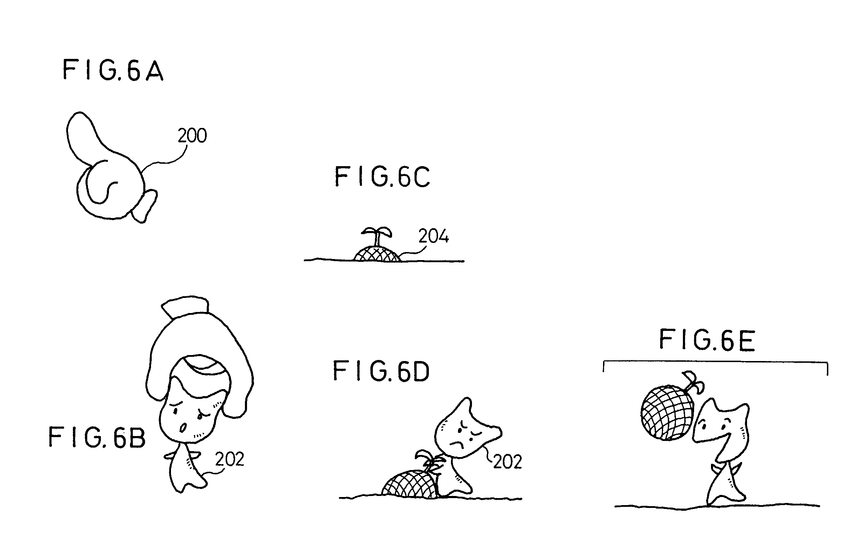

First, a specific example of the first function will be described below. As shown in FIG. 6A, a cursor 200 is displayed on the display monitor 24, and moved to a character 202, whereupon the cursor 200 changes its shape to grip the character 202, as shown in FIG. 6B. Then, the cursor 200 is moved to deliver the gripped character 202 to a spot where an item 204 is likely to be present, as shown in FIG. 6C. Then, the character 202 is released from the cursor 200 and dropped at the spot.

As shown in FIG. 6D, the dropped character 202 starts an event, e.g., pulls the item 204 or digs a hole to look for the item 204. If the item 204 is found, then as shown in FIG. 6E, the character 202 removes the item 204 and shows the item 204 to the user.

The item 204 may be simply present in the spot or may be located in an elevated position. When the XY coordinates (world coordinates) of the character 202 and the XY coordinates (world coordinates) of the item 204 agree with each other, the character 202 automatically makes an action such as to remove the item 204. If the item 204 is buried in the ground, then the character 202 makes an action to dig a hole. If the item 204 is present on the ground, then the character 202 makes an action to pick up the item 204. If the item 204 is floating in the air, then the character 202 makes an action to jump and catch the item 204. Alternatively, the character 202 may climb a tree or a high place to acquire the item 204.

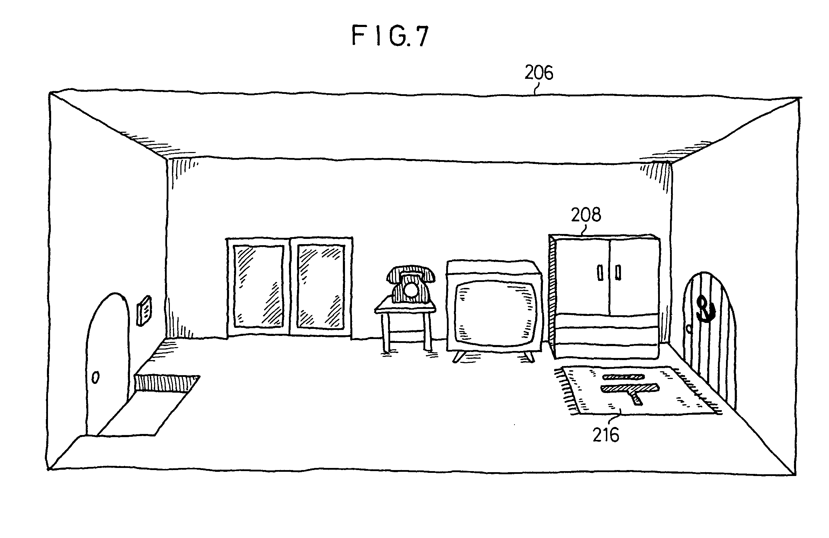

Thereafter, the cursor 200 is moved to the character 202 which has acquired the item 204, for example, whereupon the cursor 200 changes its shape to grip the character 202 which holds the item 204. Subsequently, when the cursor 200 delivers the character 202 to a position in front of a house 206 (see FIG. 7) of the character 202 and drops the character 202, the character 202 enters the house 206, and places the item 204 into a cabinet 208 in the house 206.

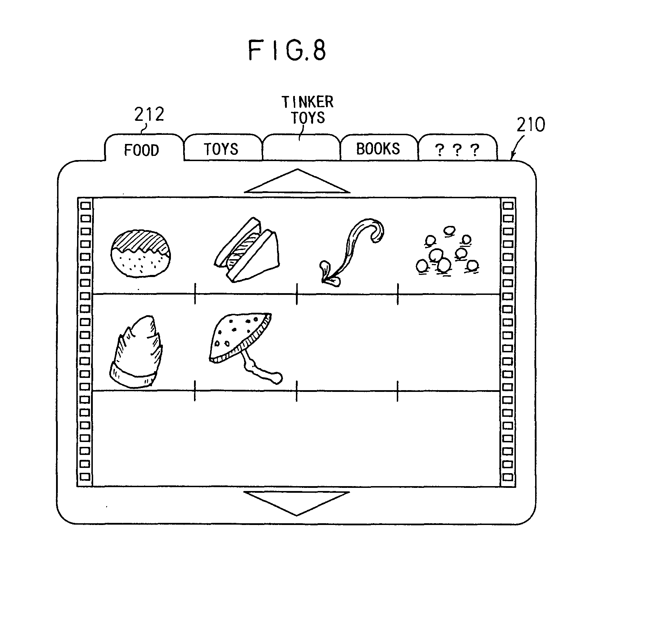

If the user wants to see the item 204 in the cabinet 208, then the cabinet 208 is double-clicked to display an item selection view 210 as shown in FIG. 8. The item selection view 210 displays items 204 registered in an item acquisition information table and classified according to type. When a tag 212 is double-clicked, all the items 204 of the type corresponding to the tag 212 are displayed. In FIG. 8, the items 204 related to foods are displayed.

A specific example of the second function will be described below. Modes to use the item 204 include a first mode to present the item 204 to another user, a second mode to give the item 204 to the character 202, and a third mode to give money gained by selling the item 204 to the character 202.

In the first mode, of various usage icons (not shown) including a presenting icon, a giving icon, an exchanging icon, and a purchasing icon, the presenting icon is clicked. Then, the cabinet 208 is double-clicked to display the item selection view 210, and a desired one of the items 204 in the item selection view 210 is selected using the cursor 200. At this time, as shown in FIG. 5, the item 204 is packaged into the present 214.

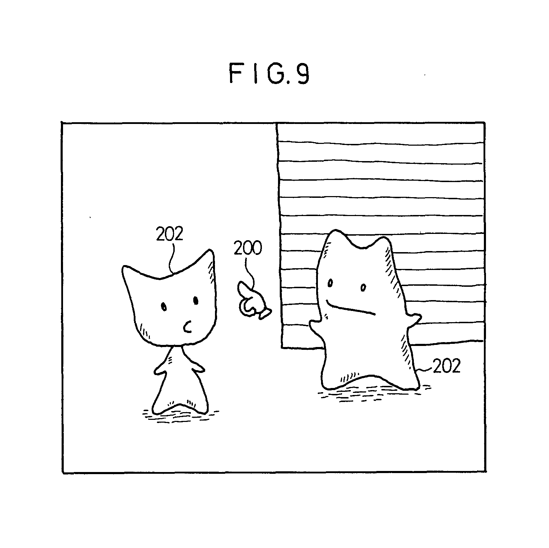

Thereafter, an address book or a file is opened, and a party (another user) to which the present 214 is to be given is selected with the cursor 200. Then, as shown in FIG. 9, a character 202 to carry the present 214 is selected by being pointed out with the cursor 200. When the character 202 is selected, the selected character 202 enters the house 206 and waits.

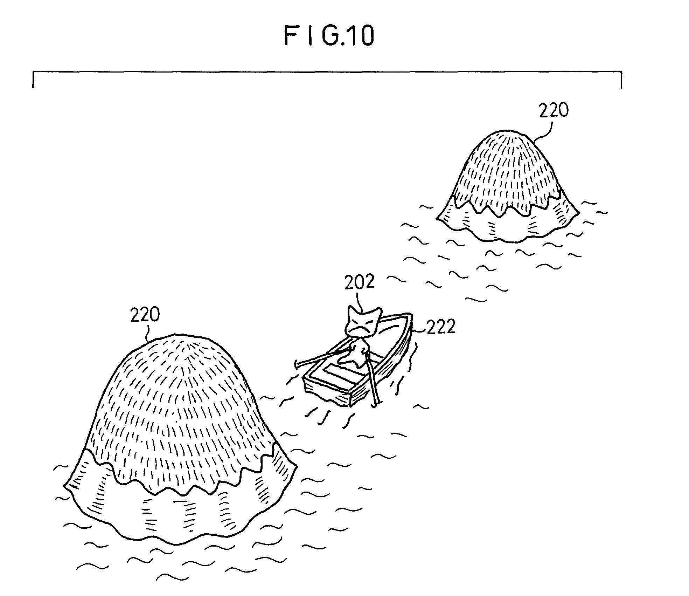

The user places the character 202 and the present 214 on an errand zone 216 (see FIG. 7) with a postal mark, and click a start icon (not shown). As shown in FIG. 10, the displayed scene changes to a scene in which the character 202 travels on a boat 222 from its own island 220 to another user's island 220.

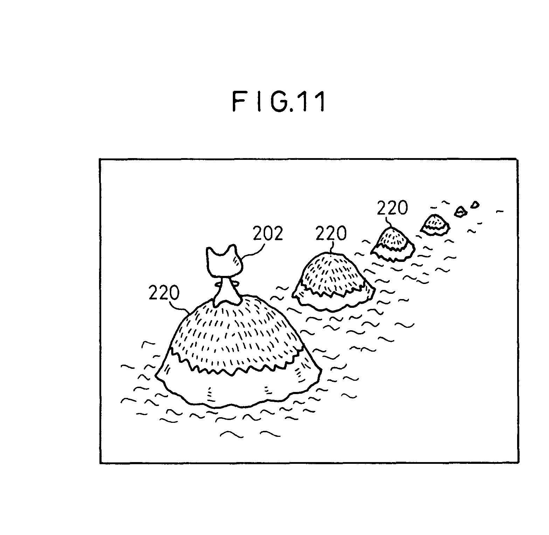

If the other user lives in a distant place, then as shown in FIG. 11, a number of islands 220 are displayed, and the boat 222 travels to the most distant island 220 while calling at other islands 220 on the way. Each time the boat 222 calls at each island 220, the character 202 is displayed on the top of the island 220.

The probability of success/failure of the errand changes depending on the age and personality of the character 202. If the character 202 is a young person or a honest person, then the probability of success is high. However, if the character 202 is a child or a dishonest person, then the probability of success is low. Particularly, if the character 202 who is a child is asked to run errands, then the probability that the character 202 gets lost and cannot come back is high. If the character 202 gets lost, then a message to that effect is displayed.

In an actual process, a code indicative of the type of the item 204 to be given as a present, i.e., a code indicative of the item 204 and a code indicative of the type of the item 204, is transferred together with user IDs, i.e., sender's and receiver's IDs, to the server 14. The server 14 detects the sender's and receiver's IDs, and checks if both the IDs are related to authentic users or not. If both the IDs are related to authentic users, then the server 14 transmits the transferred codes from the sender to the entertainment apparatus 16 of the receiver, i.e., the other user.

The entertainment apparatus 16 of the other user analyzes the codes from the server 14. If the entertainment apparatus 16 of the other user determines that the codes represent a present from a user, then it displays the packaged present 214 and a scene in which the character 202 carries the packaged present 214 on the display screen.

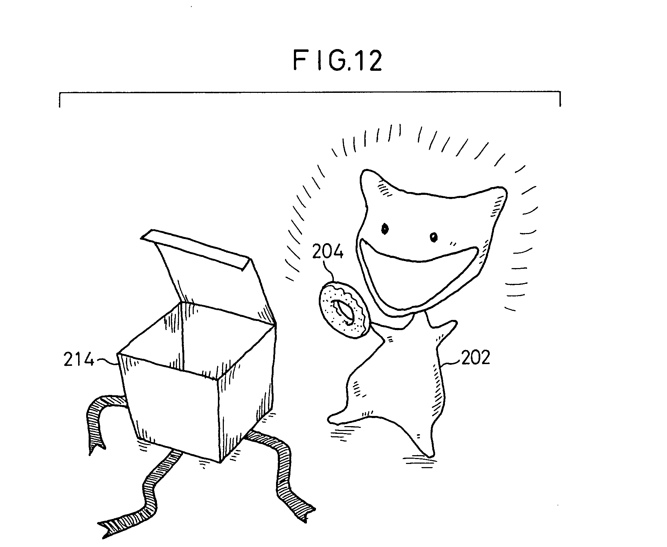

When an instruction is given to open the present 214, as shown in FIG. 12, the character 202 opens the package of the present 214 and removes the item 204, and makes a delightful action to jump.

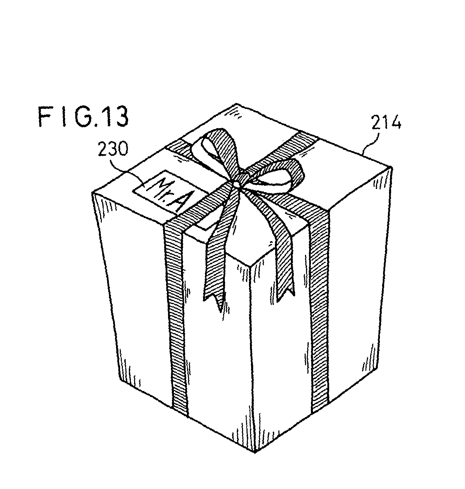

In order to let the receiver know who the sender is, a message "SENDER: ### @@@" may be displayed. However, as shown in FIG. 13, a label 230 bearing information of the sender is applied to the present 214, and when the character 202 removes the label 230, the label 230 is displayed in full scale on the display screen to let the user see the information of the sender.

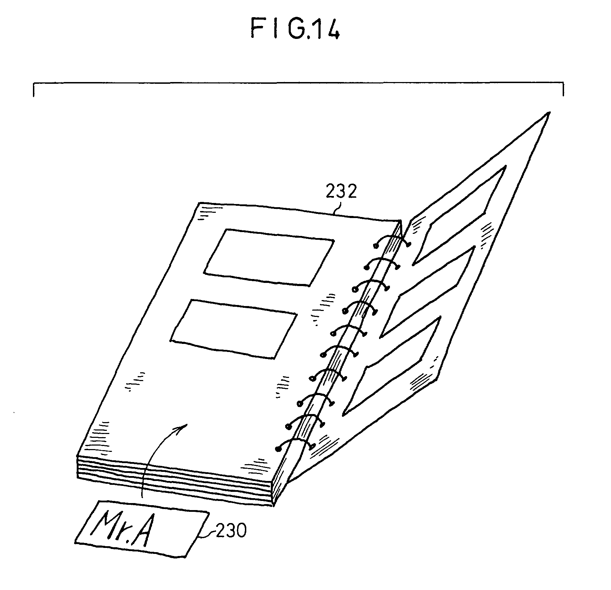

As shown in FIG. 14, the label 230 may be kept in a file 232 in the house 206 so that it can be used for a subsequent information exchange. The user can double-click the file 232 to confirm the contents of the file 232. It is possible to copy a label 230 kept in the file 232 to make a label 230 to be applied to a present.

In the second mode, of the non-illustrated usage icons including the presenting icon, the giving icon, the exchanging icon, and the purchasing icon, the giving icon, i.e., the icon to give the item 204 to the character 202, or the exchanging icon, i.e., the icon to exchange the item 204 for money, is clicked. The cabinet 208 is double-clicked to display the item selection view 210, and a desired one of the items 204 in the item selection view 210 is selected using the cursor 200. At this time, the cursor 200 changes is shape to grip the item 204.

Then, the cursor 200 is moved to deliver the gripped item 204 to a desired character 202. When the item 204 is positioned at the character 202, the item 204 is given to the character 202. At this time, if the giving icon has been selected from the usage icons, then the character 202 makes a delightful jump. If the item 204 is related to foods, then the character 202 makes an action to eat the item 204.

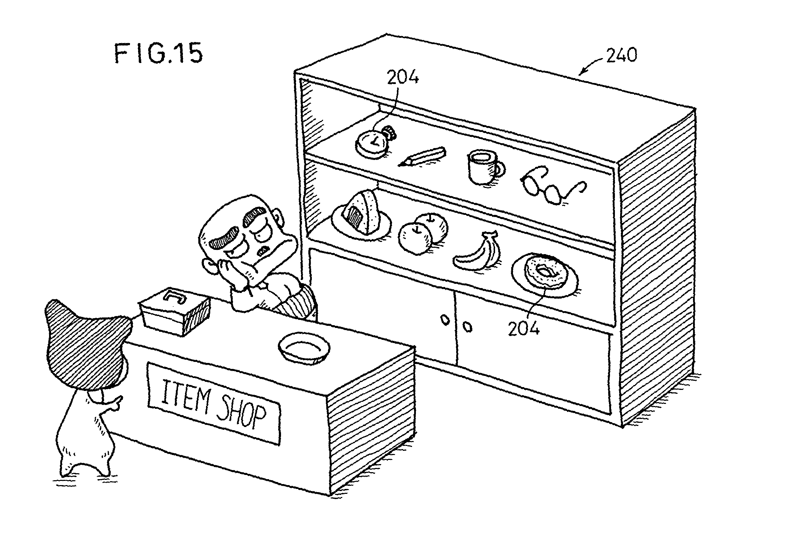

If the exchanging icon has been selected among the usage icons, then the selected character 202 carries the given item 204 to an item shop 240 shown in FIG. 15. The character 202 sells the item 204 and exchanges it for money. Thereafter, the character 202 places the money 206 into the cabinet 208.

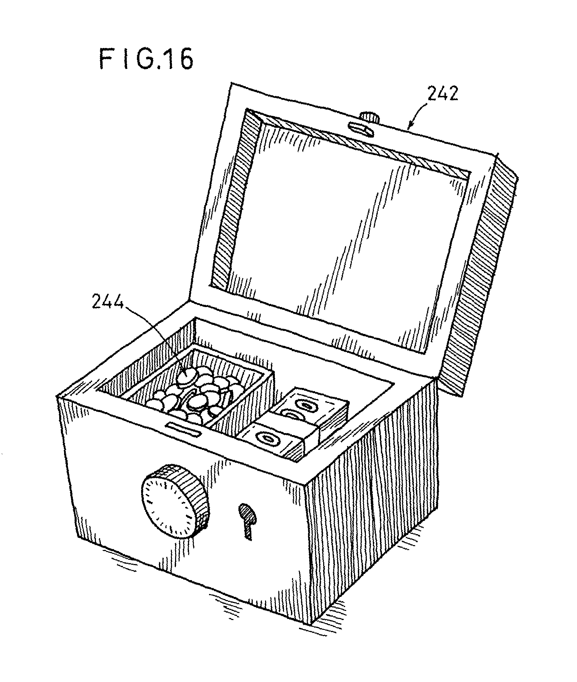

If the purchasing icon is selected among the usage icons, then the cabinet 208 is double-clicked, whereupon a savings box 242 shown in FIG. 16 appears and presently available money 244 is displayed. When an amount of money to be removed from the presently available money 244 is entered, the cursor 200 changes its shape to grip the money to be removed, e.g., in the form of bills.

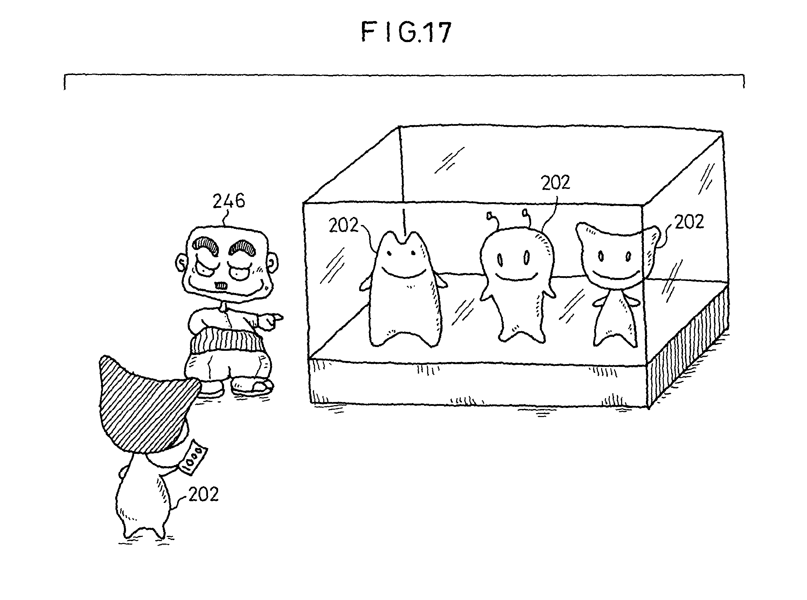

The cursor 200 with the gripped money is moved to a desired character 202. When the cursor 200 is positioned at the character 202, the money is given to the character 202. If an icon to buy a character (not shown) is clicked at this time, then as shown in FIG. 17, the character 202 with the money goes to a special character 246 for selling characters, and pays the money to buy a character 202. At this time, the user may indicate a character 202 to be purchased.

If an icon to buy an item (not shown) is clicked, then the character 202 with the money goes to the item shop 240 and buys a necessary item 204. At this time, the user may indicate an item 204 to be purchased.

The items 204 may be available in types related to foods, and also in other types related to the house 206, e.g., in the form of a house-remodeling coupon and a cleaning coupon. If such items are used, the atmosphere of the video game can be changed to effectively keep the user's interest in the video game.

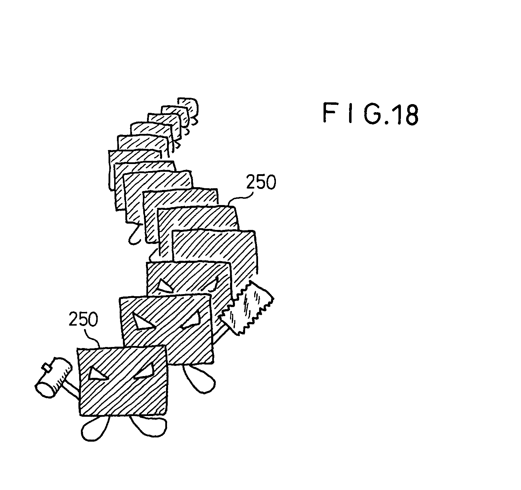

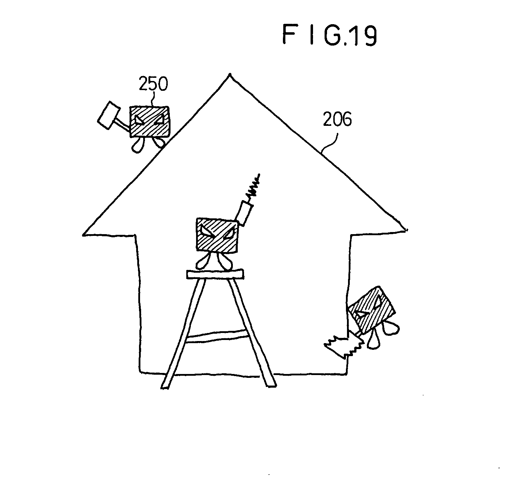

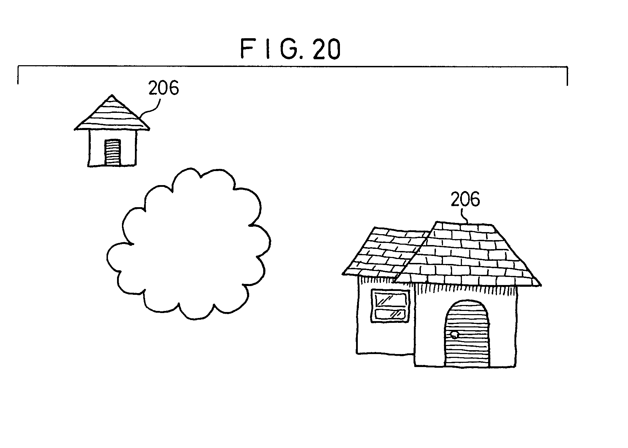

For example, if a house-remodeling coupon is purchased and used, then a number of characters 250 representing carpenters appear, as shown in FIG. 18, and start remodeling the house 206, as shown in FIG. 19. The house 206 is now remodeled into an appearance different from the initial appearance as shown in FIG. 20. For example, if the house 206 has a Japanese-style initial appearance, then it is remodeled into a fairy-tale style or a western style, or a gorgeous appearance.

If a cleaning coupon is purchased and used, then a number of characters representing cleaning persons appear, and start cleaning the interior and exterior of the house 206.

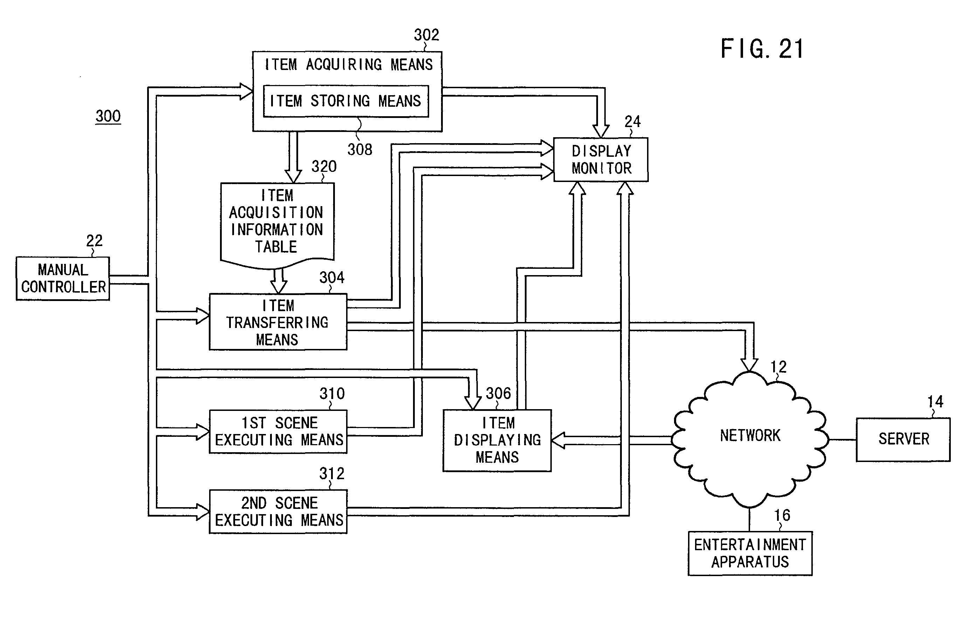

One example of software for performing the above first and second functions will be described below with reference to FIGS. 21 through 27. As shown in FIG. 21, the software comprises an item processing means 300.

The item processing means 300 can be supplied to the entertainment apparatus 16 from a randomly accessible recording medium such as the optical disk 26 or the memory card 18, or the network 12. It is assumed in the present embodiment that the item processing means 300 is read from the optical disk 26.

The item processing means 300 is downloaded in advance from the optical disk 26 played back by the entertainment apparatus 16 into the main memory 76 in the control system 60 thereof according to a predetermined process, and executed by the CPU 72 of the control system 60.

As shown in FIG. 21, the item processing means 300 has an item acquiring means 302 for displaying a scene in which the character 202 displayed on the display monitor 24 is delivered or dropped according to a control input from the user, and controlling the character 202 to make an action to acquire an item 204 when the character 202 reaches a position where the item 204 is placed, an item transferring means 304 for transferring the acquired item 204 as a present 214 to the entertainment apparatus 16 of another user, and an item displaying means 306 for displaying the item 204 presented from another user.

The item acquiring means 302 has an item storing means 308 for displaying a scene in which the acquired item 204 is stored into a predetermined storage area, i.e., the cabinet 208 in the house 206.

The item processing means 300 also has a first scene executing means 310 for selecting and executing one of a scene in which the character 202 uses the item 204 and a scene in which the character 202 exchanges the item 204 for money, according to a selecting action of the user when the acquired item 204 is given to the character 202, and a second scene executing means 312 for selecting and executing one of a scene in which the character 202 purchases an item 204 and a scene in which the character 202 purchases another character 202, according to a selecting action of the user when the money is given to the character 202.

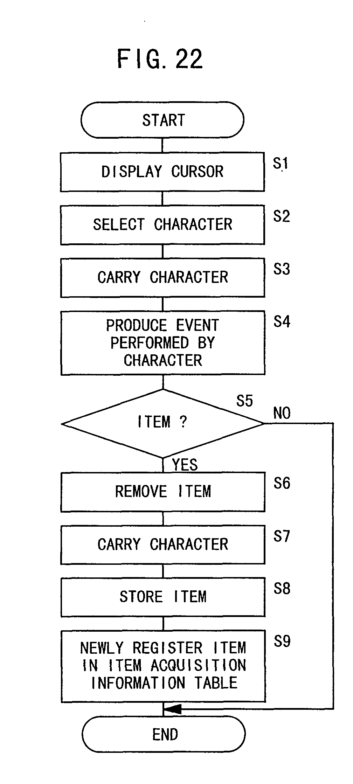

A processing sequence of the item processing means 300 will be described below with reference to FIGS. 22 through 27.

In step S1 shown in FIG. 22, the item acquiring means 302 displays a cursor 200 for gripping a character 202 on the display monitor 24. Then, the item acquiring means 302 selects a character 202 to be gripped according to a control input from the user in step S2.

In step S3, the selected character 202 is gripped and lifted with the cursor 200, and then delivered to a spot where an item 204 is likely to be present and dropped at the spot.

Thereafter, in step S4, an event begins for the character 202 to pull out the item 204 or to dig a hole to look for the item 204.

In step S5, the item acquiring means 302 determines whether the character 202 has found the item 204 or not based on whether the XY coordinates (world coordinates) of the character 202 and the XY coordinates (world coordinates) of the item 204 agree with each other.

If the character 202 has found the item 204, then control goes to step S6 in which the character 202 automatically removes the item 204. When the character 202 has removed the item 204, the item acquiring means 302 displays a scene in which the character 202 shows the item 204 to the user.

In step S7, the character 202 that has acquired the item 204 is gripped and lifted with the cursor 200 according to a control input from the user, and is delivered to a position in front of the house 206 of the character 202 and dropped in that position.

In step S8, the item storing means 308 displays a scene in which the character 202 enters the house 206 and stores the item 204 into the cabinet 208. In step S9, the presently acquired item 204 is newly registered in an item acquisition information table 320 (see FIG. 21) and classified according to type.

If the processing in step S9 is finished or if the character 202 has found no item 204 in step S5, then the processing sequence of the item acquiring means 302 is put to an end.

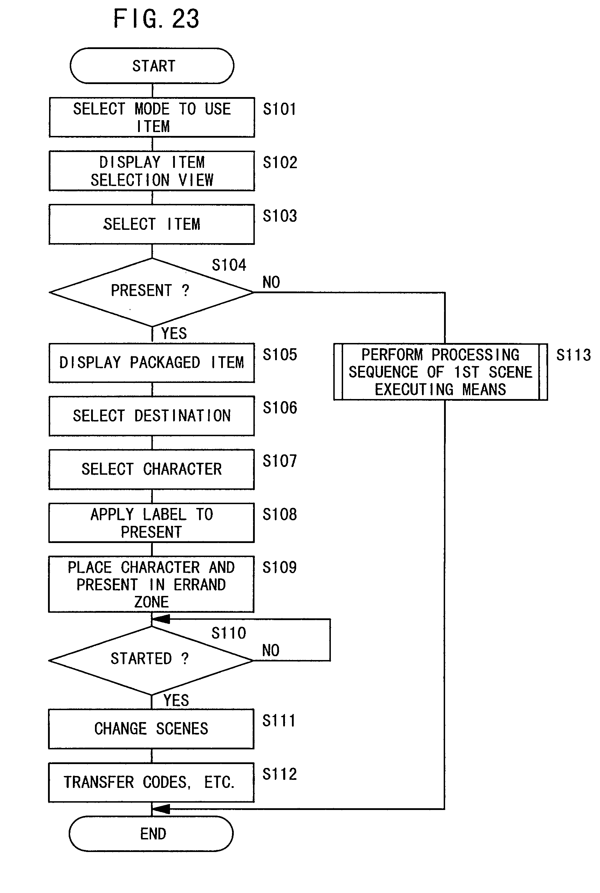

Then, processing sequences of the item transferring means 304 and the first scene executing means 310 will be described below with reference to FIGS. 23 through 26.

In step S101 shown in FIG. 23, the item transferring means 304 selects a mode to use an item 204. In step S102, the cabinet 208 is double-clicked to display the item selection view 210. Thereafter, a desired item 204 in the item selection view 210 is selected with the cursor 200.

In step S104, the item transferring means 304 determines whether the selected mode is the first mode to present the item 204 or not based on whether the presenting icon is selected or not. If the selected mode is the first mode to present the item 204, then control goes to step S105 in which the selected item 204 that is packaged is displayed as the present 214 shown in FIG. 13.

Then, in step S106, an address book or a file is opened, and another user to which the item 204 is to be sent is selected with the cursor 200. In step S107, a character 202 to carry the present 214 is selected with the cursor 200. The selected character 202 enters the house 206 and waits.

In step S108, a label 230 (see FIG. 13) bearing user information such as an ID and a profile is given to the character 202. The character 202 makes an action to apply the label 230 to the present 214.

In step S109, the character 202 and the present 214 are placed in the errand zone 216 (see FIG. 7) with the postal mark. Thereafter, in step S110, a control input to start the errand is waited for. When a starting icon (not shown) is clicked, control goes to step S111 in which, as shown in FIG. 10, the scene changes to a scene in which the character 202 travels on the boat 222 from its own island 220 to another user's island 220. In step S112, a code indicative of the type of the item 204 to be given as a present, i.e., a code indicative of the item 204 and a code indicative of the type of the item 204, is transferred together with user IDs, i.e., sender's and receiver's IDs, to the server 14.

If the processing in step S112 is finished, then the processing sequence of the item transferring means 304 is put to an end.

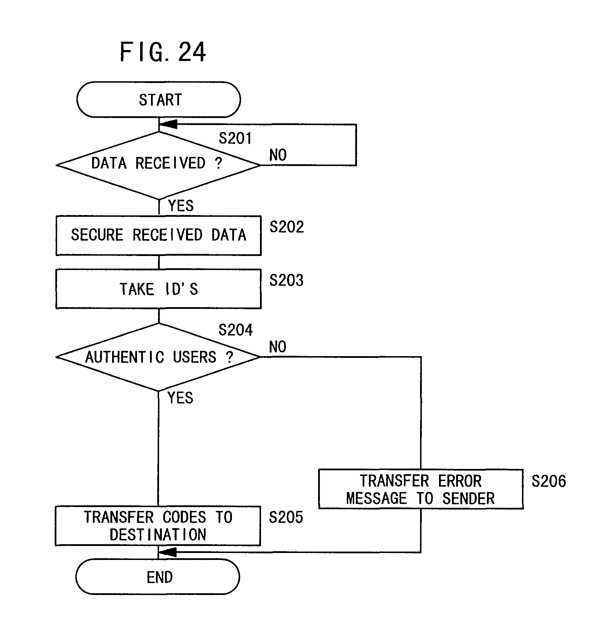

A processing sequence of the server 14 will be described below with reference to FIG. 24. In step S201 shown in FIG. 24, the server 14 waits for data from the client. If the server 14 has received data from the client, then control goes to step S202 in which the received data is secured.

In step S203, the server 14 takes the IDs, i.e., the sender's and receiver's IDs, from the received data. In step S204, the server 14 checks if both the IDs are related to authentic users or not.

If both the IDs are related to authentic users, then the server 14 transmits the various codes included in the received data to the entertainment apparatus 16 corresponding to the destination's ID. If both the IDs are not related to authentic users, then control goes to step S206 in which the server 14 sends an error message to the sender.

In the entertainment apparatus 16 of the other user, i.e., in the entertainment apparatus 16 corresponding to the destination's ID, the item displaying means 306 performs its processing sequence.

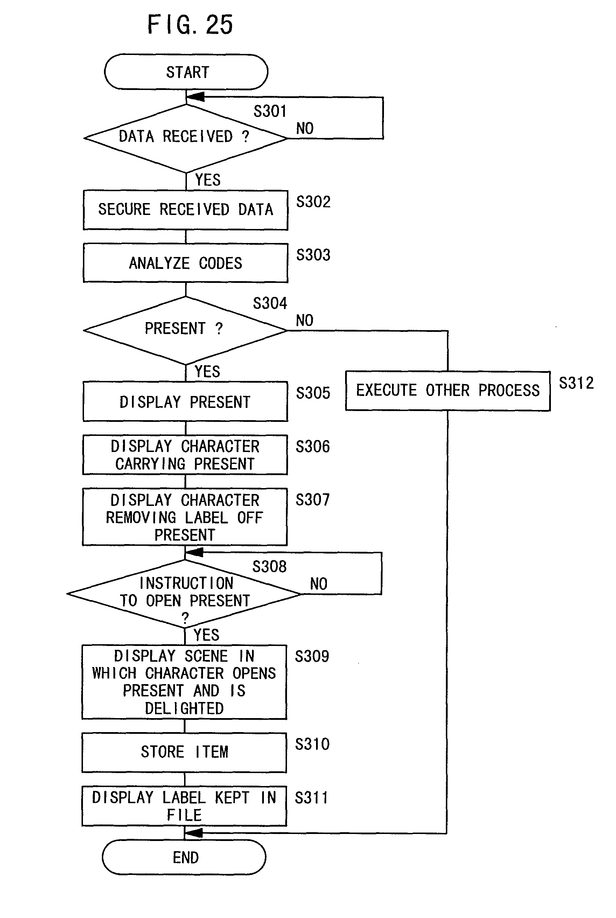

The processing sequence of the item displaying means 306 will be described below with reference to FIG. 25. In step S301, the item displaying means 306 waits for the data from the server 14. When the item displaying means 306 has received the data from the server 14, then control goes to step S302 in which the received data is secured.

In step S303, the item displaying means 306 analyzes the various codes included in the received data. In step S304, the item displaying means 306 determines whether the codes represent a present or not. If the codes represent a present, then control goes to step S305 in which the item displaying means 306 displays the packaged item 204 as the present 214, which is the same as the present 214 sent from the sender.

In step S306, the item displaying means 306 displays the character 202 as it carries the present 214 into the house 206. In step S307, the item displaying means 306 displays the character 202 as it removes the label 230 off the present 214 and shows it to the user.

In step S308, the item displaying means 306 waits for a control input from the user, e.g., an instruction from the user to open the present 214. If the item displaying means 306 has received an instruction from the user to open the present 214, then control proceeds to step S309 in which the item displaying means 306 displays a scene in which the character 202 opens the present 214 and is delighted, as shown in FIG. 12.

Thereafter, in step S310, the item displaying means 306 displays a scene in which the character 202 places the presented item 204 into the cabinet 208. In step S311, the item displaying means 306 displays a scene in which the label 230 is kept in the file 232.

If the codes do not represent a present in step S304, then control goes to step S312 in which the item displaying means 306 performs another process depending on the analyzed codes.

If the processing in step S311 or the processing in step S312 is finished, then the processing sequence of the item displaying means 306 is put to an end.

If the selected mode is not the first mode to present the item 204 in step S104 shown in FIG. 23, then control goes to step S113 in which the first scene executing means 310 performs its processing sequence.

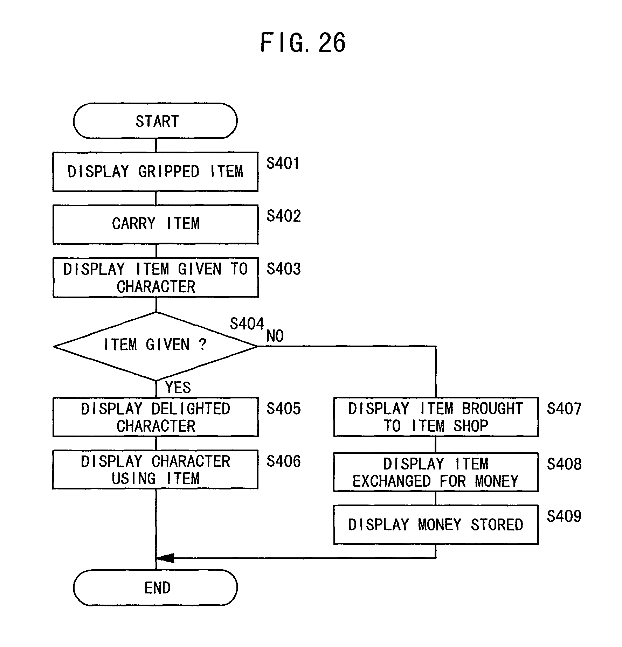

The processing sequence of the first scene executing means 310 will be described below with reference to FIG. 26. In step S401 shown in FIG. 26, the first scene executing means 310 displays a scene in which the selected item 204 is gripped by the cursor 200. In step 402, the gripped item 204 is carried to a desired character 202 according to a control input from the user. In step S403, when the item 204 is positioned at the character 202, the item 204 is given to the character 202.

In step S404, the first scene executing means 310 determines whether the selected mode is the second mode to give the item 204 to the character 202 based on whether the giving icon is selected among the various usage icons. If the selected mode is the second mode to give the item 204 to the character 202, then control goes to step S405 in which the first scene executing means 310 displays a scene in which the character 202 makes a delightful jump. In step S406, the first scene executing means 310 displays a scene in which the character 202 uses the item 204. If the item 204 is related to foods, then the character 202 makes an action to eat the item 204 (see FIG. 5).

If the exchanging icon is selected rather than the giving icon in step S404, then control goes to step S407 in which the first scene executing means 310 displays a scene in which the character 202 brings the item 204 to the item shop 240. In step S408, the first scene executing means 310 displays a scene in which the character 202 sells the item 204 and exchanges it for money. Thereafter, in step S409, the first scene executing means 310 displays a scene in which the character 202 enters the house 206 and places the money into the cabinet 208.

If the processing in step S406 or the processing in step S409 is finished, then the processing sequence of the first scene executing means 310 is put to an end.

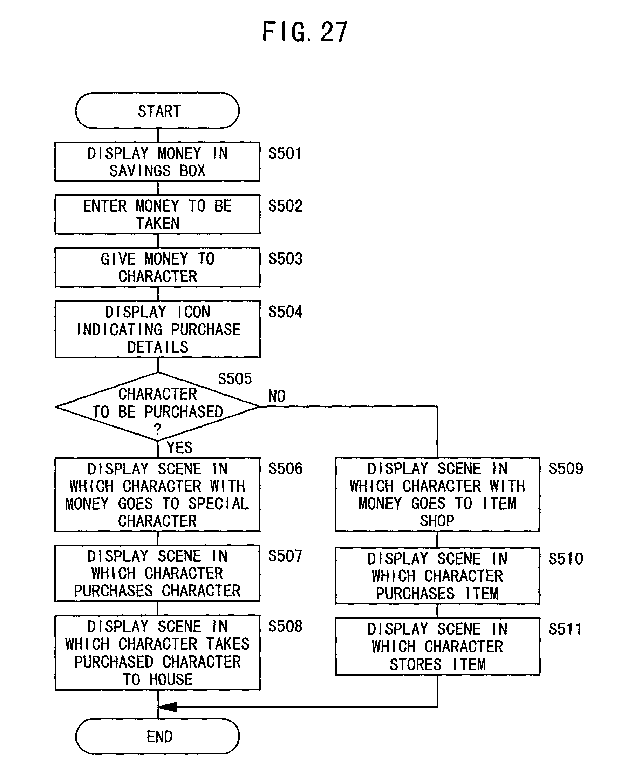

A processing sequence of the second scene executing means 312 will be described below with reference to FIG. 27.

The processing sequence of the second scene executing means 312 is performed when the purchasing icon is selected among the usage icons. In step S501 shown in FIG. 27, the cabinet 208 is double-clicked to show the savings box 242 and display presently available money 244, as shown in FIG. 16.

In step S502, the user enters an amount of money to be removed from the presently available money 244, displaying the cursor 200 as it grips the money, e.g., bills. Then, in step S503, the gripped money is delivered to a desired character 202 according to a control input from the user. When the money is positioned at the character 202, the money is given to the character 202.

In step S504, the second scene executing means 312 displays icons indicative of purchase details, i.e., an icon to purchase a character and an icon to purchase an item. If the icon to purchase a character is clicked, then control goes via decision step S505 to step S506 in which the second scene executing means 312 displays a scene in which the character 202 brings the money to the special character 246 for selling characters.

In step S507, the second scene executing means 312 displays a scene in which the character 202 pays the money to purchase a character 202 selected by the user according to a control input from the user. In step S508, the second scene executing means 312 displays a scene in which the character 202 takes the purchased character 202 to the house 206.

If the icon to purchase an item is clicked, then control goes via decision step S505 to step S509 in which the second scene executing means 312 displays a scene in which the character 202 brings the money to the item shop 240, as shown in FIG. 15.

In step S510, the second scene executing means 312 displays a scene in which the character 202 pays the money to purchase an item 204 selected by the user according to a control input from the user. In step S511, the second scene executing means 312 displays a scene in which the character 202 puts the purchased item 204 into the cabinet 208 in the house 206.

If the processing in step S508 or the processing in step S511 is finished, then the processing sequence of the second scene executing means 312 is put to an end.

As described above, the item processing means 300 allows the displayed character 202 to be delivered and dropped at a suitable spot according to a control input from the user. At the spot where the character 202 is dropped, the character 202 searches for an item 204, for example, and when the character 202 finds the item 204, the character 202 makes an action to take the item 204 and shows the item 204 to the user.

Therefore, the character 202, with which the user would be empathizing, does not find an item 204 for the character 202 itself, but the character 202 searches for and acquires an item 204 for the user.

As the video game progresses, the user can enjoy various different modes of handling items 204, e.g., the user may play with a displayed character 202 and acquire an item 204, and present the acquired item 204 to another user or character 202, or the user may exchange the acquired item 204 for money, and purchase a character 202 or an item 204 with the money.

In the present embodiment, the item storing means 308 can display a scene in which the acquired item 204 is stored into the cabinet 208 in the house 206 of the character 202, for example. Therefore, the user can have not only the fun of acquiring the item 204, but also the fun of storing the acquired item 204.

Furthermore, the item transferring means 304 allows the acquired item 204 to be presented to another user via the network 12. Consequently, the user can communicate with another user with not only a message or a video image such as a video image captured by a digital camera or the like, but also an item 204 handled by the character 202.

Sending a message or a video image to another user requires a cumbersome process to be performed in advance, such as a preparatory action or message correction prior to the transmission. However, sending an item 204 handled by the character 202 to another user is simpler than sending a message or a video image, and hence is more effective in communicating with another user.

If a scene in which the character 202 sends the present 214 to another user is displayed, then the displayed scene is effective to give the other user the impression that the character 202 has taken the trouble of bringing the present 214 to the other user. The communication between the users, which would otherwise tend to be business-like, is thus made personal and intimate by such a displayed scene.

When the acquired item 204 is transferred to another user, the item transferring means 304 transfers at least a code indicative of the type of the item 204, and the item displaying means 306 displays an item 204 based on the transferred code. Inasmuch as it is not necessary to transfer image data of the item 204 itself, the transferring process can be carried out at a high speed.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. An entertainment system comprising:
an entertainment apparatus (16) for executing various programs;
at least one manual controller (22) for entering control requests from the user into said entertainment apparatus (16);
a display unit (24) for displaying images outputted from said entertainment apparatus (16); and
item processing means (300) for processing an item (204) handled by a character (202) displayed on said display unit (24);
said item processing means (300) comprising:
item acquiring means (302) for displaying a scene in which the character (202) displayed on said display unit (24) is carried according to a control input from the user, and when said character (202) reaches a position where an item (204) is placed, controlling said character (202) to make an action to acquire said item (204).

2. An entertainment system according to claim 1, wherein said action to acquire said item (204) comprises an action to search for and remove said item (204).

3. An entertainment system according to claim 1 or 2, wherein said item processing means (300) comprises:
item storing means (308) for, when said character (202) reaches a spot where said item (204) is to be stored according to a control input from the user, controlling said character (202) to make an action to store the acquired item (204) in said spot.

4. An entertainment system according to any one of claims 1 to 3, wherein said item processing means (300) comprises:
item transferring means (304) for transferring the acquired item (204) to an entertainment apparatus (16) of another user connected via a network (12).

5. An entertainment system according to claim 4, wherein said item transferring means (304) comprises:
means for transferring at least a code indicative of a type of said item (204) when said item (204) is transferred to the entertainment apparatus (16) of the other user;
said item processing means (300) comprising:
item displaying means (306) for displaying said item (204) based on the transferred code.

6. An entertainment system according to any one of claims 1 to 5, wherein said item processing means (300) comprises:
scene executing means (310) for, when the acquired item (204) is given to said character (202), selecting and executing one of a plurality of scenes including a scene in which at least said character (202) uses said item (204) and a scene in which said character (202) exchanges said item (204) for hypothetical money (244), according to a selecting action of said user.

7. An entertainment system according to claim 6, wherein said item processing means (300) comprises:
second scene executing means (312) for, when said hypothetical money (244) is given to said character (202), selecting and executing one of a plurality of scenes including a scene in which at least said character (202) purchases said item (204) with the hypothetical money (244) and a scene in which said character (202) purchases another character (202), according to a selecting action of said user.

8. An entertainment apparatus for connection to a manual controller (22) for outputting a control request from the user, and a display unit (24) for displaying images, comprising:
item processing means (300) for processing an item (204) handled by a character (202) displayed on said display unit (24);
said item processing means (300) comprising:
item acquiring means (302) for displaying a scene in which the character (202) displayed on said display unit (24) is carried according to a control input from the user, and when said character (202) reaches a position where an item (204) is placed, controlling said character (202) to make an action to acquire said item (204).

9. A recording medium storing a program and data for use in an entertainment apparatus (16) for connection to a manual controller (22) for outputting a control request from the user, and a display unit (24) for displaying images, said program comprising the steps of:
processing an item (204) handled by a character (202) displayed on said display unit (24);
said step of processing an item (204) comprising the steps of:
displaying a scene in which the character (202) displayed on said display unit (24) is carried according to a control input from the user, and when said character (202) reaches a position where an item (204) is placed, controlling said character (202) to make an action to acquire said item (204).

10. A recording medium according to claim 9, wherein said action to acquire said item (204) comprises an action to search for and remove said item (204).

11. A recording medium according to claim 9 or 10, wherein said step of processing an item (204) comprises the step of:
when said character (202) reaches a spot where said item (204) is to be stored according to a control input from the user, controlling said character (202) to make an action to store the acquired item (204) in said spot.

12. A recording medium according to any one of claims 9 to 11, wherein said step of processing an item (204) comprises the step of:
transferring the acquired item (204) to an entertainment apparatus (16) of another user connected via a network (12).

13. A recording medium according to claim 12, wherein said step of transferring the acquired item (204) comprises the step of:
transferring at least a code indicative of a type of said item (204) when said item (204) is transferred to the entertainment apparatus (16) of the other user;
said step of processing an item (204) comprising the step of:
displaying said item (204) based on the transferred code.

14. A recording medium according to any one of claims 9 to 13, wherein said step of processing an item (204) comprises the steps of:
when the acquired item (204) is given to said character (202), selecting and executing one of a plurality of scenes including a scene in which at least said character (202) uses said item (204) and a scene in which said character (202) exchanges said item (204) for hypothetical money (244), according to a selecting action of said user.

15. A recording medium according to claim 14, wherein said step of processing an item (204) further comprises the steps of:
when said hypothetical (244) is given to said character (202), selecting and executing one of a plurality of scenes including a scene in which at least said character (202) parchases said item (204) with the hypothetical money (244) and a scene in which said character (202) purchases another character (202), according to a selecting action of said user.

16. A program readable and executable by a computer, for use in an entertainment apparatus (16) for connection to a manual controller (22) for outputting a control request from the user, and a display unit (24) for displaying images, said program comprising the steps of:
processing an item (204) handled by a character (202) displayed on said display unit (24);
said step of processing an item (204) comprising the steps of:
displaying a scene in which the character (202) displayed on said display unit (24) is carried according to a control input from the user, and when said character (202) reaches a position where an item (204) is placed, controlling said character (202) to make an action to acquire said item (204).
